(19) **Europäisches Patentamt**
**European Patent Office**
**Office européen des brevets**

(11) **EP 1 862 495 A1**

(12) **EUROPEAN PATENT APPLICATION**
published in accordance with Art. 158(3) EPC

(43) Date of publication:
**05.12.2007 Bulletin 2007/49**

(51) Int Cl.:
*C08J 9/04* (2006.01)    *B29C 47/00* (2006.01)
*B29K 23/00* (2006.01)    *B29K 105/04* (2006.01)

(21) Application number: **06729707.7**

(22) Date of filing: **22.03.2006**

(86) International application number:
**PCT/JP2006/305740**

(87) International publication number:
**WO 2006/101142 (28.09.2006 Gazette 2006/39)**

(84) Designated Contracting States:
**DE FR GB**

(30) Priority: **22.03.2005 JP 2005082615**

(71) Applicant: **Prime Polymer Co., Ltd.**
**Tokyo 105-7117 (JP)**

(72) Inventors:
• **SUGAWARA, Minoru**
**Chiba, 2990193 (JP)**

• **OTSUKI, Yasuhiko**
**Chiba, 2990193 (JP)**
• **TSUNORI, Ryoichi**
**Chiba, 2990193 (JP)**

(74) Representative: **Gille Hrabal Struck Neidlein Prop Roos**
**Brucknerstrasse 20**
**40593 Düsseldorf (DE)**

(54) **EXTRUDED PROPYLENE RESIN FOAM AND PROCESS FOR PRODUCTION THEREOF**

(57)    Extruded propylene-based resin foam according to the present invention is formed by extrusion-foaming a propylene-based resin, and the extruded propylene-based resin foam has a closed cell content of less than 40 % and an expansion ratio of 10 or more. Since the extruded propylene-based resin foam has an open-cell structure in which a cell-broken state is formed at a desired level and has a high expansion ratio, each cell in the foam has a sound absorption performance, such that the extruded foam is excellent in sound absorption performance.

F I G . 2

EP 1 862 495 A1

**Description**

TECHNICAL FIELD

The present invention relates to extruded propylene-based resin foam having an excellent sound absorption performance and to a method for manufacturing the same.

BACKGROUND ART

Extruded foam molded by extrusion-foaming a thermoplastic resin and an assembly of bundled threads of the extruded foam molded by a so-called strand-extrusion involving the steps of extruding the thermoplastic resin from dies having a large number of small pores; bundling extruded resin threads together; and fusing and foaming the surfaces thereof are excellent in mechanical properties even though light in weight. Therefore, the foam is broadly applied as structural materials in various fields, such as the fields of building construction, civil engineering and the fields of automobiles. In particular, the foam is expected to be employed as a structural material having a sound absorption performance. As such extruded foam of a thermoplastic resin, extruded foam formed of polyurethane-based resins or polystyrene-based resins is known.

However, a polyurethane resin and a polystyrene resin are materials that are not always excellent in recycling characteristics, and there is a problem that when these resins are used, it is difficult to sufficiently comply with the construction waste recycling law (law on recycling of materials for construction works, etc.). In addition, the polystyrene resin has poor heat resistance and chemical resistance. Therefore, extruded foam made of a thermoplastic resin that is alternative to those resins has been demanded.

On the other hand, a polypropylene-based resin, which is excellent in mechanical property, heat-resisting property, chemical resistance, electrical property and the like, is also a low cost material, so that it is widely used in various molding fields. Thus, extruded foam of the polypropylene-based resin is also expected to have high industrial utility. In recent years, the extruded foam of the propylene-based resin has been expected to be a sound absorption material.

The sound absorption performance of the extruded foam depends on both an open cell structure and an expansion ratio of the extruded foam. Specifically, it is known that, if a cell is broken in the extruded foam so as to form a gas phase continuously connecting the foam cells, a sound wave is absorbed via the continuous gas phase, whereby the sound absorption performance is improved. Therefore, extruded foam having an excellent sound absorption performance may be obtained by forming a molded foam product to have a low closed cell content (i.e., not to have a closed cell structure) and to have an open-cell structure.

Since the sound wave is absorbed by the gas phase in the foam, the sound absorption performance may be further improved by increasing a ratio of the gas phase, i.e., by increasing the expansion ratio.

However, in forming the open-cell structure is formed in the extruded foam, gas in the cell may leak outside through the continuous gas phase during a molding processing process, such that the extruded foam is contracted. Particularly, when a non-crosslinked polypropylene resin, which has a low melt tension, is singly used for foam molding, a strength of the foam is lowered due to a rapid decrease in viscosity during a melting process. Thus, the extruded foam can only restrictively retain a shape and it has been difficult to obtain an expansion ratio of a sufficient level.

On the other hand, for a solution of such problems, there have been attempts made to improve the expansion ratio of the extruded resin foam in which an open-cell structure is formed (see Patent Documents 1 to 3, for example).

[Patent Document 1] JP-A-07-41613
[Patent Document 2] JP-A-10-235670
[Patent Document 3] JP-A-2003-292668

DISCLOSURE OF THE INVENTION

PROBLEMS TO BE SOLVED BY THE INVENTION

On the other hand, in the conventional extruded propylene-based resin foam as disclosed in the above-mentioned patent documents, a broken cell is formed in secondary processing, the secondary processing including limiting decomposition conditions of a foaming agent, irradiating the obtained foam with microwaves, mechanically deforming the foam cell, or the like. However, the techniques described above entails a number of manufacturing steps, thus the techniques are complicated.

Additionally, in the above-mentioned patent documents, in a case where a propylene-based resin is used, it has been substantially difficult to maintain a high expansion ratio (for example, 10 or more) in the extruded foam in which an open-cell structure is formed, thus it has not been possible to provide extruded propylene-based resin foam having an excellent sound absorption performance.

Therefore, it is an object of the present invention to provide extruded propylene-based resin foam having an excellent sound absorption performance and a method for manufacturing the same by providing the extruded foam with both a high open cell content and a high expansion ratio in a compatible manner.

MEANS FOR SOLVING THE PROBLEMS

In order to achieve the above-mentioned object, extruded propylene-based resin foam according to an aspect of the present invention is extruded propylene-based resin foam formed by extrusion-foaming a propylene-based resin, having: a closed cell content of less than 40 percent, and an expansion ratio of 10 or more.

The extruded propylene-based resin foam according to the aspect of the present invention is formed by extrusion-foaming the propylene-based resin to have the closed cell content of less than 40%, so that an open cell structure in which a gas phase is provided to continuously connect cells is preferably formed in the extruded foam. In addition, the extruded foam is formed to have the expansion ratio of 10 or more, so that a proportion of the gas phase in the foam is increased. Thus, extruded foam having a high sound absorption performance and extruded foam having a high heat resistance can be provided. Further, with the expansion ratio being 10 or more, the foam can be made light in weight, whereby a usability of the foam is improved.

A propylene-based resin constituting the extruded foam has not only an excellent recycling property, but also a favorable chemical resistance, heat-resistance, and the like. Accordingly, the extruded propylene-based resin foam according to the present invention also has such properties (recycling property, chemical resistance, and heat-resistance). Further, the use of the propylene-based resin that is a low cost material makes it possible to provide extruded foam having the above-mentioned effects at low cost.

In the extruded propylene-based resin foam according to the aspect of the present invention, it is preferable that an average cell diameter of a foam cell forming the foam is 0.005 to 5.0 mm.

According to this aspect of the present invention, the foam cell forming the extruded propylene-based resin foam has the average diameter of 0.005 to 5.0 mm, such that more cell walls can be formed in the extruded foam as compared with a general extruded propylene-based resin foam. Thus, viscous dissipation of a sound vibration energy is efficiently performed by viscous friction of air on the cell walls, whereby an excellent sound absorption performance is obtained.

The extruded propylene-based resin foam according to the aspect of the present invention is preferably an assembly of bundled threads of extruded foam, in which a plurality of extrusion-foamed threads are bundled.

According to this aspect of the present invention, the extruded propylene-based resin foam is formed as an assembly of bundled threads where a large number of threads of the extruded foam are bundled together. Accordingly, since the expansion ratio of the extruded foam can be enhanced, it is easy to mold the extruded foam having a high expansion ratio and a sufficient thickness in various forms.

A method for manufacturing extruded propylene-based resin foam according to another aspect of the present invention includes steps of: heating a propylene-based resin into a molten state; kneading the propylene-based resin in the molten state while applying a shear stress; and molding the propylene-based resin by extrusion-foaming the resin through an extrusion die, in which the propylene-based resin is extrusion-foamed so that a pressure gradient (k) represented by the following formula (I) and a decompression rate (v) represented by the following formula (II) become 50 MPa/m ≤ k ≤ 800 MPa/m and 5 MPa/s ≤ v ≤ 100 MPa/s respectively at a position where a cross-sectional area of a resin flow path in a vicinity of an extrusion die outlet is minimized, the cross-section area being perpendicular to a flow direction of the resin flow path;

[Formula 1]

$$\text{Pressure gradient (k)} = \frac{M}{(A/\pi)^{\left(\frac{1+n}{2}\right)}} \left\{ \frac{2^{\frac{1}{n}}(1+3n)Q}{nA} \right\}^n \quad \cdots(I)$$

[Formula 2]

$$\text{Decompression rate (v)}= \frac{M}{\left(A/\pi\right)^{\left(\frac{1+n}{2}\right)}}\left\{\frac{2^{\frac{1}{n}}\left(1+3n\right)}{n}\right\}^{n}\left(\frac{Q}{A}\right)^{(n+1)} \quad\cdots\cdots(\text{II})$$

(in the formulae (I) and (II), each of M and n represents a material constant, A represents the cross-sectional area (mm$^2$) at the position where the cross-sectional area of the resin flow path in the vicinity of the extrusion die outlet is minimized, the cross-section area being perpendicular to the flow direction of the resin flow path, and Q represents a volume flow rate (mm$^3$/s) of the propylene-based resin passing through the die outlet).

According to the method for manufacturing the extruded propylene-based resin foam according to this aspect of the present invention, the pressure gradient (k) at the position where the cross-sectional area of the resin flow path in the vicinity of the extrusion die outlet (for instance a position 0 to 5 cm away from the die outlet) is minimized, the cross-section area being perpendicular to the flow direction of the resin flow path is set to be in a specified range in extrusion-foaming the melt-kneaded propylene-resin from the extrusion die outlet, such that a cell nucleation density with which the cell diameter of the extruded foam becomes an appropriate value is achieved. Further, since the decompression rate is set to be in a specified range, cell breaking is appropriately promoted by shear deformation at the die outlet while the expansion ratio is prevented from being reduced due to the cell breaking in a cell growing period. Thus, the extruded propylene-based resin foam having an open-cell structure with a closed cell ratio of less than 40% can be manufactured easily and efficiently while maintaining a high expansion ratio (10 or more).

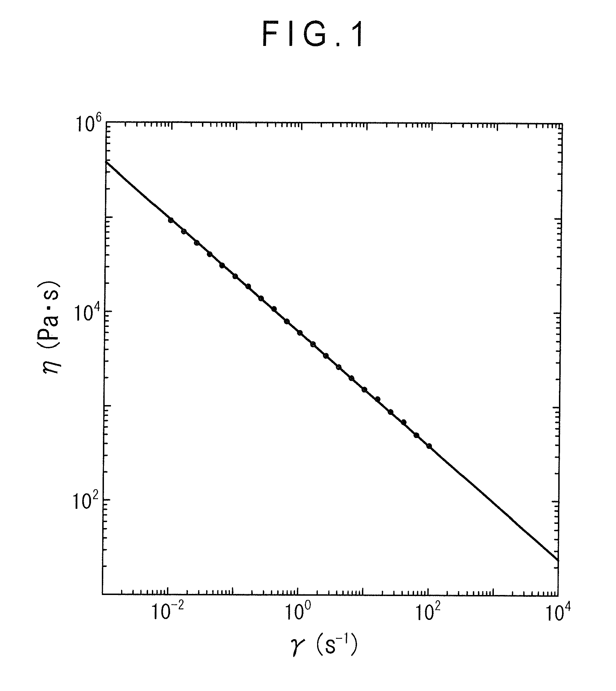

Note that the material constants M (Pa·s$^{11}$) and n are values calculated as follows.
M (Pa·s$^{11}$) is a parameter showing a degree of viscosity of the propylene-based resin, and results of a logarithmic plot of a relationship between shear rate ($\gamma$) and shear viscosity ($\eta_M$), which are resin-specific values, are shown in FIG. 1. As shown in FIG. 1, the shear viscosity at a predetermined resin temperature ($\eta_M$) depends on the shear rate ($\gamma$). When the shear rate is within a range of $10^0$ to $10^2$ (s$^{-1}$), the value can be approximated in accordance with the following formula (IV-1). The material constant M shows a gradient in the formula (IV-1).

[Formula 3]

$$\eta_M = M\gamma^{n-1} \quad\cdots\cdots(\text{IV-1})$$

Based on the formula (IV-1), the shear viscosity ($\eta_M$) obtained when the shear rate ($\gamma$) is 10° (S$^{-1}$) may be used as M. Note that the value of M used in the present invention is determined based on the temperature and viscosity of the propylene-based resin and is usually about 500 to 30,000 (Pa·s$^n$).

The material constant n, which is a parameter showing a non-Newtonian property of a propylene-based resin, can be calculated based on the following formula (IV-2) using $\eta_M$ ($\gamma$=100) of the shear viscosity ($\eta_M$) obtained when the shear rate ($\gamma$) is 100 (s$^{-1}$). Note that the value of n used in the present invention is usually about 0.2 to 0.6.

[Formula 4]

$$n = \frac{1}{2}\log\left\{\frac{\eta M(\gamma = 100)}{M}\right\} + 1 \quad\cdots\cdots(\text{IV-2})$$

In the method for manufacturing the extruded propylene-based resin foam according to the aspect of the present invention, it is preferable that a propylene-based multistage polymer including the following constituents (A) and (B) is used as the propylene-based resin:

(A) a constituent containing a propylene homopolymer component or a copolymer component of propylene and α-olefin having carbon number of 2 to 8, each having an intrinsic viscosity [η] of more than 10 dL/g, which is measured in a tetralin solvent at 135°C, the component occupying 5 to 20 mass% of the total polymer; and

(B) a constituent containing a propylene homopolymer component or a copolymer component of propylene and α-olefin having carbon number of 2 to 8, each having an intrinsic viscosity [η] of 0.5 to 3.0 dL/g, which is measured in a tetralin solvent at 135°C, the component occupying 80 to 95 mass% of the total polymer.

The method for manufacturing the extruded propylene-based resin foam uses the propylene-based multistage polymer as a material. The propylene-based multistage polymer is a linear propylene-based polymer having a higher melt tension due to the addition of the constituent (A) that is an ultrahigh-molecular-weight propylene based polymer. The multistage polymer also has an excellent viscoelastic property because the viscoelasticity is adjusted by controlling a molecular weight distribution. Therefore, by using the propylene-based multistage polymer having the excellent viscoelastic property as the constituent material, the extruded propylene-based resin foam can be reliably formed to have the expansion ratio of 10 or more.

In the method for manufacturing the extruded propylene-based resin foam according to the aspect of the present invention, it is preferable that a relationship between a melt flow rate (MFR) at 230°C and a melt tension (MT) at 230°C of the propylene-based multistage polymer satisfies the following expression (III):

[Formula 5]

$$\log(MT) > -1.33\log(MFR) + 1.2 \qquad \cdots (III)$$

According to this aspect of the present invention, the relationship between the melt flow rate (MFR) at 230°C and the melt tension (MT) at 230°C of the propylene-based multistage polymer is represented by the above-mentioned expression (III). Therefore, foam having the high expansion ratio can be easily formed, and the extruded foam can easily and reliably have the expansion ratio of 10 or more.

In the extruded propylene-based resin foam according to the aspect of the present invention, it is preferable that a total area of broken cell portions is 2% or more of a total area of an observed region of the foam, the broken cell portions being evaluated through a section photograph of the foam.

In the extruded propylene-based resin foam according to the aspect of the present invention, it is preferable that a total area of the broken cell portions having pore areas of $1 \times 10^{-5}$ mm$^2$ or more is 2% or more of the total area of the observed region, the broken cell portions evaluated through the section photograph of the foam.

According to this aspect of the present invention, the broken cell portions (pores formed on the cell walls) may be naturally generated mainly due to the pressure gradient of the die and the property of the molten resin. Moreover, the pores may be formed on the cell walls by pressurizing or vacuum-aspirating the extruded foam so as to break the cells or by forming pores from the outside using a needle or the like. In this manner, the same effects may be obtained.

BRIEF DESCRIPTION OF DRAWINGS

FIG. 1 is a graph showing a relationship between a shear rate (γ) and a shear viscosity ($\eta_M$).
FIG. 2 is an electron micrograph of a cross-section of extruded propylene-based resin foam obtained in Example 1 (magnification: 75 times).

BEST MODE FOR CARRYING OUT THE INVENTION

The extruded propylene-based resin foam according to the present invention (hereinafter, referred to as extruded foam) is provided by extrusion-foaming a propylene-based resin, and has the closed cell content of less than 40 % and the expansion ratio of 10 or more. With this arrangement, the extruded foam that is light weighted and has an excellent sound absorption performance can be desirably provided.

Specifically, with the closed cell content being less than 40 %, the extruded foam has an open cell structure in which a cell-broken state is appropriately formed, and with the expansion ratio being 10 or more, each cell in the foam attains a sound absorption performance. In this manner, the extruded foam having the sound absorption performance is provided. Note that the closed cell ratio is preferably 20% or less, and that the expansion ratio is preferably 20 or higher.

Meanwhile, in the extruded propylene-based resin foam according to the present invention, when the average diameter of the foam cell forming the foam is 0.005 to 5.0 mm, more cell walls may be formed in the extruded foam. Thus, viscous dissipation of sound vibration energy is efficiently performed by air viscous friction on a cell wall, whereby the sound absorption performance of the extruded foam can be improved.

Note that the average diameter of the foam cell is preferably 0.05 to 2.0 mm.

As the propylene-based resin forming the extruded foam of the present invention configured as described above, any propylene-based resin having high melt tension when melted can be used. For example, any of those disclosed in JP 10-279632 A, JP 2000-309670 A, JP 2000-336198 A, JP 2002-12717 A, JP 2002-542360 A, and JP 2002-509575 A can be used.

Further, as described above, for obtaining the extruded foam of the present invention, it is preferable to increase the melt tension of the resin at the time of melting and to use as the polypropylene-based resin a resin material having excellent viscoelastic property.

As an example of the propylene-based resin having excellent viscoelastic property as described above, it is advantageous to use as the a propylene-based resin constituting a foam a propylene-based multistage polymer including constituents (A) and (B) as described below:

(A) a constituent containing a propylene homopolymer component or a copolymer component of propylene and $\alpha$-olefin having carbon number of 2 to 8, each having an intrinsic viscosity [$\eta$] of more than 10 dL/g, which is measured in a tetralin solvent at 135°C, the component occupying 5 to 20 mass% of the total polymer; and

(B) a constituent containing a propylene homopolymer component or a copolymer component of propylene and $\alpha$-olefin having carbon number of 2 to 8, each having an intrinsic viscosity [$\eta$] of 0.5 to 3.0 dL/g, which is measured in a tetralin solvent at 135°C, the component occupying 80 to 95 mass% of the total polymer.

The propylene-based multistage polymer is a linear propylene-based polymer having a higher melt tension due to the addition of the constituent (A) that is an ultrahigh-molecular-weight propylene based polymer. The multistage polymer also has a viscoelastic property adjusted by controlling a molecular weight distribution. The use of such a propylene-based multistage polymer having the excellent viscoelastic property as the material is preferable because the extruded propylene-based resin foam meeting the requirements of the present invention as described above (i.e., the closed cell content of less than 40 %, the expansion ratio of 10 or more and the average cell diameter of 0.005 to 5.0 mm) can be reliably provided.

Note that "having an excellent viscoelastic property", although depending on a resin material to be used, refers to a resin material that is largely deformed during high-speed deformation in forming the cell on one hand and that relaxes a subsequent stress at moderately high speed on the other hand. When relaxing the stress is performed at low speed, the structure of the extruded foam cannot be maintained after the cells are broken because of a residual stress.

Now, the melt tension becomes insufficient when the constituent (A) has an intrinsic viscosity of 10 dL/g or less. Thus, the desired foaming performance may not be obtained.

In addition, when the mass fraction of the constituent (A) is less than 5 mass%, the melt tension becomes insufficient and the desired foaming performance may not be obtained. In contrast, when the mass fraction exceeds 20 mass%, a so-called melt fracture may intensify, which leads to a rough surface or the like of the extruded foam and resulting in a decrease in product quality.

The intrinsic viscosity of the constituent (A) is preferably more than 10 dL/g as described above, more preferably in the range of 12 to 20 dL/g, and particularly preferably in the range of 13 to 18 dL/g.

In addition, the mass fraction of the constituent (A) is preferably in the range of 8 to 18 mass%, and particularly preferably in the range of 10 to 18 mass%.

The melt tension becomes insufficient when the intrinsic viscosity of the constituent (B) is less than 0.5 dL/g and the desired foaming performance may not be obtained. In contrast, when it exceeds 3.0 dL/g, the viscosity becomes too high and a suitable extrusion molding process may not be performed.

Further, when the mass fraction of the constituent (B) is less than 80 mass%, a preferable extrusion molding process may not be easily performed. When the mass fraction exceeds 95 mass%, likewise, the melt tension becomes low and a preferable extrusion molding process may not be easily performed.

As descried above, the constituent (B) has an intrinsic viscosity preferably in the range of 0.5 to 3.0 dL/g, more preferably in the range of 0.8 to 2.0 dL/g, and particularly preferably in the range of 1.0 to 1.5 dL/g.

Further, the mass fraction of the constituent (B) is preferably in the range of 82 to 92 mass%, and particularly preferably in the range of 82 to 90 mass%.

In this propylene-based multistage polymer, $\alpha$-olefin having carbon number of 2 to 8 as a constituent component of the copolymer component, can be, for example, $\alpha$-olefins other than propylene, such as ethylene and 1-butene. Among them, it is preferable to use ethylene.

In addition, the propylene-based multistage polymer has the melt flow rate (MFR) at 230°C of preferably 100 g/10 min. or less, and particularly preferably 20 g/10 min. or less. When MFR exceeds 100 g/10 min., the melt tension and viscosity of the multistage polymer become low, the molding can be made difficult.

The propylene-based multistage polymer preferably has a relationship between the melt flow rate (MFR) at 230°C and the melt tension (MT) at 230°C represented by the following expression (III).

[Formula 6]

$$\log(MT) > -1.33\log(MFR) + 1.2 \qquad \cdots\cdots(III)$$

Here, when the relationship between the melt flow rate (MFR) at 230°C and the melt tension (MT) at 230°C does not satisfy the above expression (III), it becomes difficult to perform the molding process of the foam with high expansion ratio. In such a case, the extruded foam having an expansion ratio of 10 or more may not be obtained. The constant (1.2) in the expression is preferably 1.3 or more, particularly preferably 1.4 or more.

Further, in order for the propylene-based multistage polymer to have the relationship represented by the expression (III), the polymer may include 5 mass% of the constituent (A).

In the propylene-based multistage polymer, it is preferable that as a dynamic viscoelasticity in a molten state (the relationship between angular frequency ω and storage-modulus G'), an inclination of storage modulus at a side of high frequencies is more than a predetermined level. Specifically, the ratio G'(10)/G'(1) of the storage modulus G'(10) at the angular frequency of 10 rad/s to the storage modulus G'(1) at the angular frequency of 1 rad/s is preferably 2.0 or more, and particularly preferably 2.5 or more. When the ratio G'(10)/G'(1) is smaller than 2.0, the stability of the extruded foam may be impaired when an external deformation such as elongation is applied to the extruded foam.

Similarly, in the propylene-based multistage polymer, it is preferable that as a dynamic viscoelasticity in a molten state, an inclination of the storage modulus at a side of low frequencies is less than a predetermined level. Specifically, the ratio G'(0.1)/G'(0.01) of the storage modulus G'(0.1) at the angular frequency of 0.1 rad/s to the storage modulus G'(0.01) at the angular frequency of 0.01 rad/s is preferably 6.0 or less, and particularly preferably 4.0 or less. When the ratio G'(0.1)/G'(0.01) exceeds 6.0, the expansion ratio of the extruded foam may not be easily enhanced.

The propylene-based multistage polymer can be produced by polymerizing the propylene or copolymerizing propylene with α-olefin having carbon number of 2 to 8 in a polymerization procedure including two or more stages, using olefin-polymerization catalysts including the following components (a) and (b) or the following components (a), (b), and (c):

    (a) A solid catalyst component produced by processing titanium trichloride produced by reducing titanium tetrachloride with an organic aluminum compound by an ether compound and an electron acceptor;
    (b) An organic aluminum compound; and
    (c) Cyclic ester compound.

In (a) the solid catalyst component produced by processing the titanium trichloride produced by reducing the titanium tetrachloride with the organic aluminum compound by the ether compound and the electron acceptor (hereinafter, also simply referred to as "(a) solid catalyst component"), as the organic aluminum compounds to be used for reducing titanium tetrachloride, there may be used, for example: (i) alkyl aluminum dihalide, specifically methyl aluminum dichloride, ethyl aluminum dichloride, and n-propyl aluminum dichloride; (ii) alkyl aluminum sesquihalide, specifically ethyl aluminum sesquichloride; (iii) dialkyl aluminum halide, specifically dimethyl aluminum chloride, diethyl aluminum chloride, di-n-propyl aluminum chloride, and diethyl aluminum bromide; (iv) trialkyl aluminum, specifically trimethyl aluminum, triethyl aluminum, and triisobutyl aluminum; and (v) dialkyl aluminum hydride, specifically diethyl aluminum hydride. Here, the term "alkyl" refers to lower alkyl such as methyl, ethyl, propyl, or butyl. In addition, the term "halide" refers to chloride or bromide. Particularly, the former is generally used.

The reduction reaction of the organic aluminum compound for obtaining the titanium trichloride is generally performed at temperatures ranging from -60 to 60°C, preferably -30 to 30°C. If the reduction reaction is performed at a temperature of less than -60°C, the reduction reaction will require an extended period of time. In contrast, when the reduction reaction is performed at a temperature of more than 60°C, an excessive reduction may partially occur, which is unfavorable. The reduction reaction is preferably performed under the presence of an inactivated hydrocarbon solvent such as pentane, heptane, octane, and decane.

Further, it is preferable to perform an ether treatment and an electron acceptor treatment on the titanium trichloride obtained by the reduction reaction of the titanium tetrachloride with the organic aluminum compound.

Examples of ether compounds, which can be preferably used in the ether treatment of the titanium trichloride, include ether compounds in which each hydrocarbon residue is a chain hydrocarbon having carbon number of 2 to 8, such as diethyl ether, din-propyl ether, di-n-butyl ether, diisoamyl ether, dineopentyl ether, di-n-hexyl ether, di-n-octyl ether, di-2-ethyl hexyl ether, methyl-n-butyl ether, and ethyl-isobutyl ether. Among them, in particular, use of di-n-butyl ether is preferable.

Preferable examples of the electron acceptors that can be used in the treatment of titanium trichloride include halogenated compounds of elements in groups III to IV and VIII in the periodic table, specifically, titanium tetrachloride, silicon tetrachloride, boron trifluoride, boron trichloride, antimony pentachloride, gallium trichloride, ferric trichloride, tellurium dichloride, tin tetrachloride, phosphorus trichloride, phosphorus pentachloride, vanadium tetrachloride, and zirconium tetrachloride.

The treatment of titanium trichloride with the ether compound and the electron acceptor in preparation of the solid catalyst component (a) may be performed using a mixture of both treatment agents, or may be performed using one of these treatment agents at first and then the other afterward. Note that among them, the latter is more preferable than the former: the treatment with the electron acceptor after the treatment with ether is more preferable.

Prior to the treatment with the ether compound and the electron acceptor, the titanium trichloride is preferably washed with hydrocarbon. The above-mentioned ether treatment with titanium trichloride is performed such that the titanium trichloride is brought into contact with the ether compound. The titanium trichloride treatment with the ether compound is advantageous when performed such that those two are brought into contact with each other in the presence of a diluent. Examples of the diluent preferably include inactivated hydrocarbon compounds such as hexane, heptane, octane, decane, benzene, and toluene. A treatment temperature in the ether treatment is preferably in the range of 0 to 100°C. In addition, although a time period for the treatment is not specifically limited, the treatment is generally performed in the range of 20 minutes to 5 hours.

An amount of the ether compound used may be generally 0.05 to 3.0 mol, preferably 0.5 to 1.5 mol per mol of the titanium trichloride. It is not preferable that the amount of the ether compound used is less than 0.05 mol because a sufficient increase in stereo regularity of a polymer to be produced is impaired. On the other hand, it is unfavorable that the amount of the ether compound used exceeds 3.0 mol because yield can be decreased even though stereo regularity of a polymer to be generated increases. Note that the titanium trichloride treated with the organic aluminum compound or the ether compound is a composition mainly containing titanium trichloride.

Further, as the solid catalyst component (a), Solvay-type titanium trichloride may be preferably used.

As the organic aluminum compound (b), the same organic aluminum compound as described above may be used.

Examples of the cyclic ester compound (c) include γ-lactone, δ-lactone, and ε-lactone. Among them, ε-lactone is preferably used.

Further, the catalyst for olefin polymerization used in the production of the propylene-based multistage polymer can be obtained by mixing the components (a) to (c) as described above.

For obtaining the propylene-based multistage polymer, among two-staged polymerization methods, it is preferable to polymerize propylene or copolymerize propylene and α-olefin having carbon number of 2 to 8 in the absence of hydrogen. Here, the term "in the absence of hydrogen" means "substantially in the absence of hydrogen", so that it includes not only the complete absence of hydrogen but also the presence of a minute amount of hydrogen (for example, about 10 molppm). In short, the term "in the absence of hydrogen" includes a case of containing hydrogen in an amount small enough to prevent the intrinsic viscosity [η] of the propylene-based polymer or of the propylene-based copolymer at the first stage, which is measured in a tetralin solvent at 135°C, from becoming 10 dL/g or less.

In the absence of hydrogen as described above, the polymerization of propylene or the copolymerization of propylene with α-olefin may result in the production of constituent (A) of the propylene-based multistage polymer as a ultrahigh-molecular-weight propylene-based polymer. The constituent (A) may be preferably produced by slurry polymerization of a raw material monomer in the absence of hydrogen at a polymerization temperature of preferably 20 to 80°C, more preferably 40 to 70°C, with a polymerization pressure of generally ordinary pressure to 1.47 MPa/s, preferably 0.39 to 1.18MPa/s.

In addition, in this production method, the constituent (B) of the propylene-based multistage polymer may be preferably produced at the second stage or later. There is no specific limitation for the production conditions of the constituent (B) except for a limitation that the olefin-based polymer catalyst as described above should be used. However, the constituent (B) may be preferably produced by polymerizing a raw material monomer in the presence of hydrogen serving as a molecular weight modifier at a polymerization temperature of preferably 20 to 80°C, more preferably 60 to 70°C with a polymerization pressure of generally ordinary pressure to 1.47 MPa/s, preferably 0.19 to 1.18 MPa/s.

In the production method as described above, a preliminary polymerization may be carried out before performing the principal polymerization. A powder morphology can be favorably maintained by performing the preliminary polymerization. The preliminary polymerization is generally performed such that propylene in amount of preferably 0.001 to 100 g, more preferably 0.1 to 10 g per gram of solid catalyst component is polymerized or copolymerized with α-olefin having carbon number of 2 to 8 at a polymerization temperature of preferably 0 to 80°C, more preferably 10 to 60°C.

Further, the propylene-based resin contained in the molding material of the extruded foam may be a propylene-based resin composition that includes the propylene-based multistage polymer as described above and the propylene-based polymer having the melt flow rate (MFR) at 230°C of 30 g/10 min. or less, and the ratio $M_w/M_n$ of weight average molecular weight ($M_w$) and a number average molecular weight ($M_n$) of 5.0 or less.

The above-mentioned propylene-based multistage polymer may be blended with other materials to provide a resin composition, thereby improving the moldability and high-functionality of the extruded foam, lowering the cost thereof, and the like.

The use of the resin composition allows the extruded foam to have the high melt tension and the excellent viscoelastic property, so that the extruded foam can be provided with the high expansion ratio, good surface appearance, and an effect of preventing drawing fracture at the time of sheet formation.

In the resin composition a weight ratio of the propylene-based polymer to the propylene-based multistage polymer is 6 to 1 or more, preferably 10 to 1 or more. If the weight ratio is smaller than 8 to 1, the surface appearance of the extruded foam may become poor.

The melt flow rate (MFR) of the propylene-based polymer is preferably 30 g/10 min. or less, more preferably 15 g/10 min. or less, particularly preferably 10 g/10 min. or less. When the MFR exceeds 30 g/10 min., a defective molding of the extruded foam may occur.

The $M_w/M_n$ of the propylene-based polymer is preferably 5.0 or less, particularly preferably 4.5 or less. If the $M_w/M_n$ exceeds 5.0, the surface appearance of the extruded foam may be deteriorated.

Note that the propylene-based polymer can be produced by any polymerization method using a known catalyst such as a Ziegler-Natta catalyst or a metallocene catalyst.

As the dynamic viscoelasticity in a molten state (the relationship between the angular frequency ω and the storage-modulus G'), the resin composition preferably has a predetermined level or more of the inclination of storage modulus at high frequencies. In addition, the inclination of the storage modulus at low frequencies is preferably a certain level or less.

Specifically, the ratio G'(10)/G'(1) of the storage modulus G'(10) at the angular frequency of 10 rad/s to the storage modulus G'(1) at the angular frequency of 1 rad/s is preferably 5.0 or more, more preferably 5.5 or more. When the ratio G'(10)/G'(1) is smaller than 5.0, the stability of the extruded foam may be impaired when an external deformation such as elongation is applied to the extruded foam.

In addition, the ratio G'(0.1)/G'(0.01) of the storage modulus G'(0.1) at the angular frequency of 0.1 rad/s to the storage modulus G'(0.01) at the angular frequency of 0.01 rad/s is preferably 14.0 or less, particularly preferably 12.0 or less. When the ratio G'(0.1)/G'(0.01) exceeds 14.0, the expansion ratio of the extruded foam may not be easily increased.

Here, when the extruded foam is drawn, it is common that components within a relaxation time of 1 to 10 second (s) leads to a decrease in drawing property of the extruded foam. Thus, the larger a contribution of the relaxation time of this region is, the smaller the inclination of the storage modulus G'(1) becomes at the angular frequency ω of about 1 rad/s. Thus, as an index of the inclination, the ratio G'(10)/G'(1) of the storage modulus G'(10) at the angular frequency ω of 10 rad/s is provided. From the results of a numerical simulation and an experimental analysis, it is found that the smaller the value is, the more breakable foam at the time of drawing of the extruded foam is. Therefore, the resin composition preferably has the G'(10)/G'(1) of 5.0 or more.

For cell breaking at the final stage of the growth of air bubbles or cell breaking accompanying high-speed elongation deformation near the die lips in the extrusion foam-molding process, a certain degree of strain-hardness property is required. Therefore, there is a need of an appropriate amount of the high molecular weight component at an appropriate relaxation time field. For that purpose, the storage modulus G' at the low-frequency region needs to be large to some extent. Therefore, as the index, the ratio G'(0.1)/G'(0.01) of the storage modulus G'(0.1) at the angular frequency ω of 0.1 rad/s to the storage modulus G'(0.01) at the angular frequency of 0.01 rad/s is provided. From the results of a numerical simulation and an experimental analysis, it is found that the larger the value is, the less the expansion ratio becomes due to cell breaking. Therefore, the above-mentioned resin composition preferably has the G'(0.1)/G'(0.01) of 14.0 or less.

Further, as long as the effect of the present invention is not prevented, where required, the propylene-based resin including the resin composition and constituting the extruded foam of the present invention may be added with any of stabilizers such as an antioxidant, a neutralizer, a crystal-nucleus agent, a metal deactivator, a phosphorus processing stabilizer, a UV absorbent, an UV stabilizer, an optical whitening agent, a metallic soap, and an antacid absorbent; and additives such as a cross-linking agent, a chain transfer agent, a nucleating additive, a lubricant, a plasticizer, a filler, an intensifying agent, a pigment, a dye, a flame retardant, and an antistatic agent. The amounts of those additives may be suitably determined depending on the characteristic features and molding conditions, required in the extruded foam to be molded.

When the propylene-based multistage polymer having the excellent melting viscoelasticity as described above is used as the propylene-based resin, the above-described additives can be added to the polymer to be melt-kneaded together into a shape of pellet by a conventionally-known melt-kneading machine in advance, and thereafter, the desired extruded foam may be molded.

The extruded foam of the present invention can be obtained by extrusion-foaming the above-mentioned propylene-based resin. A known extrusion foam-molding device can be used as a production device, in which a propylene-based resin is heated to be melted and then kneaded with a suitable shearing stress applied thereto for extrusion-foaming the resin from a tubular die. An extruder included in the production device may be either a uniaxial extruder or a biaxial extruder. As an extrusion foam-molding device, for example, an extrusion foam-molding of a tandem-type disclosed in JP 2004-237729A may be used, to which two extruders are connected.

In manufacturing the extruded propylene-based resin foam according to the present invention, an open-cell structure is reliably formed while a high expansion ratio is maintained if, when the propylene resin having been melt-kneaded is extrusion-foamed from an extrusion die, the pressure gradient (k) represented by the following formula (I) and the decompression rate (v) represented by the following formula (II) are respectively set to be 50 MPa/m $\leq$ k $\leq$ 800 MPa/m and 5 MPa/s $\leq$ v $\leq$ 100 MPa/s at a position where a cross-sectional area perpendicular to a flow direction of a resin flow path in the vicinity of an outlet of the extrusion die is minimized.

[Formula 7]

$$\text{Pressure gradient (k)} = \frac{M}{\left(A/\pi\right)^{\left(\frac{1+n}{2}\right)}} \left\{ \frac{2^{\frac{1}{n}}(1+3n)Q}{nA} \right\}^{n} \quad \cdots (I)$$

[Formula 8]

$$\text{Decompression rate (v)} = \frac{M}{\left(A/\pi\right)^{\left(\frac{1+n}{2}\right)}} \left\{ \frac{2^{\frac{1}{n}}(1+3n)}{n} \right\}^{n} \left(\frac{Q}{A}\right)^{(n+1)} \quad \cdots (II)$$

(in the formulae (I) and (II), M and n represent material constants, A represents the cross-sectional area (mm$^2$) at the position where the cross-sectional area perpendicular to the flow direction of the resin flow path in the vicinity of the outlet of the extrusion die is minimized, and Q represents a volume flow rate (mm$^3$/s) of the propylene resin passing through the outlet of the die.

By forming the open-cell structure, a broken cell is formed in the foam, and it is generally considered that a cell breaking phenomenon is caused by the following mechanisms.

That is, a general cell breaking phenomenon is considered to take place almost simultaneously with the following phenomenon 1 to 3: a phenomenon 1 refers to a cell breaking that is caused when the molten resin between the adjacent cells is thinned to be easily deformed due to an increase in a volume fraction of a foaming gas during a cell growing period and the molten resin undergoes a large deformation locally in accordance with a further cell growth such that the cell wall is broken; a phenomenon 2 refers to a cell breaking that is caused when the wall between the cells is further locally thinned to break the cell wall due to a residual stress entailed by a viscoelastic property of the resin after the cell growth; and a phenomenon 3 refers to a cell breaking that is caused when the cell wall thinned to be deformable selectively undergoes a large deformation with a external deforming force applied to the foam.

On the other hand, when a non-crosslinked propylene-based resin is extrusion-foamed to form extruded foam, the cell breaking according to the mechanism of the phenomenon 1 occurs owing to an insufficient melt tension of the resin before a stable state is achieved in which the cell formed in the resin sufficiently grows to form a wall. Therefore, extruded foam having a sufficient expansion ratio has not been obtainable.

If the cells are broken during the cell growing period, a plurality of cells are connected to form a continuous gas phase, and gas leaks outside the foam through the phase. With this arrangement, since the gas cannot be confined in the foam, the foam having a high expansion ratio cannot be formed.

As described above, forming the open-cell structure (forming the broken cells) causes the expansion ratio to be decreased. Accordingly, in order to provide the extruded foam having the open-cell structure (i.e., having the closed cell content of less than 40%) and the high expansion ratio of 10 or more, it is necessary to prevent the gas in the extruded foam from leaking outside by suppressing cell breaking as much as possible until the wall is formed in the extruded foam. It is necessary to maintain a state where a sufficiently high expansion ratio is being achieved, or in a state where a continuous phase is formed by cell breaking after the sufficiently high expansion ratio is achieved and a framework of the extruded foam is formed (i.e., the wall is formed) to a certain degree, such that the shape is stabilized and no gas leak takes place.

Moreover, in order to provide the extruded foam with an excellent sound absorption performance, the extruded foam must have not only the open-cell structure including the broken cell structure but also the high expansion ratio (10 or more, preferably 20 or more) for performing a sufficient sound absorption performance inside the foam.

For this purpose, the pressure gradient at a die outlet is set to be within an appropriate range so that the expansion ratio is prevented from being decreased due to the cell breaking during the foam growing period while the cell breaking is appropriately promoted by shear deformation of the die outlet, a decompression rate at the die outlet is set to be within an appropriate range so that a cell nucleation density is achieved with which the cell becomes an appropriate size.

Specifically, the pressure gradient and the decompression rate at the die outlet are set to be within the appropriate ranges respectively (the pressure gradient (k): 50 MPa/m $\leq$ k $\leq$ 800 MPa/m, the decompression rate (v): 5 MPa/s $\leq$ v $\leq$ 100 MPa/s), whereby the polypropylene-based foam can be provided in a simplified method to have both the open-cell structure and the sufficient expansion ratio with an excellent sound absorption performance.

In contrast, when the pressure gradient (k) is less than 50 MPa/m, the cell breaking is caused inside the die to a prominent degree, and the extruded foam having the sufficient expansion ratio (10 or more) may not be obtained. On the other hand, when the pressure gradient (k) is more than 800 MPa/m, it may be difficult to form the open-cell structure. It is particularly preferable that the pressure gradient (k) is within a range of 100 MPa/m $\leq$ k $\leq$ 500 MPa/m.

When the decompression rate (v) is less than 5 MPa/s, the cell breaking is caused inside the die to a prominent degree, and the extruded foam having the sufficient expansion ratio (10 or more) may not be obtained. On the other hand, if the decompression rate (v) is more than 100 MPa/s, it may be difficult to form the open-cell structure, which may result in a further degradation of the sound absorption performance. It is particularly preferable that the decompression rate (v) is within a range of 20 MPa/s $\leq$ v $\leq$ 60 MPa/s.

In the formulae (I) and (II) above, the material constant of the propylene-based resin, M (which is a parameter showing the material viscosity level as described above and variable depending on the viscosity and temperature of the material) is about 500 to 30,000 (Pa·s$^n$), and n (which is a parameter showing non-Newtonian property of the material) is about 0.2 to 0.6. Accordingly, in order for the above-described pressure gradient (k) and decompression rate (v) to be set to be 50 MPa/m $\leq$ k $\leq$ 800 MPa/m and 5 MPa/s $\leq$ v $\leq$ 100 MPa/s respectively, it is preferable to set within the range of 0.1 to 4.0 mm$^2$ the cross-sectional area (A) of the flow path at the position where the cross-sectional area perpendicular to the flow direction of the resin flow path in the vicinity of the extrusion die outlet is minimized, and more preferable to set within the range of 0.3 to 2.0 mm$^2$. The volume flow rate Q (per inner tube die) of a propylene-based resin that passes through one die outlet is set to 5 to 300 mm$^3$/s, preferably 10 to 150 mm$^3$/s.

In the method for manufacturing according to the present invention, it is taken into consideration that the diameter of the resin flow path in the vicinity of the extrusion die outlet is not constant (i.e., for example, it is taken into consideration that the diameter of the resin flow path is decreased in the vicinity of the outlet of the extrusion die. In other words, the position where the cross-sectional area perpendicular to the flow direction of the resin flow path in the vicinity of the extrusion die outlet is minimized is considered). When the diameter and the cross-sectional area of the resin flow path are nearly constant in the vicinity of the extrusion die outlet, as the cross-sectional area (A) in the formulae (I) and (II), such constant cross-sectional area may be used.

In manufacturing the extruded foam, for example, multiple threads are extrusion-foamed through a tubular die assembly in which a plurality of tubular dies are provided or through an extrusion die in which a plurality of extrusion orifices are formed to be mutually fused and bundled in a longitudinal direction, so that an assembly of bundled threads of the extruded foam may be obtained. In this manner, by forming the assembly of bundled threads of the extruded foam in which the multiple threads are bundled together, the expansion ratio of the extruded foam may be increased, and the extruded foam having the high expansion ratio and a sufficient thickness may be easily formed in various shapes.

Note that manufacturing such an assembly of the bundled threads of the extruded foam is known from JP 53-1262 A, for example.

The shape of the thread that forms the assembly of the bundled threads of the extruded foam depends on the shape of the extrusion orifices provided in the extrusion die, and the shape of the extrusion orifice may be any shape such as circle, rhombus and slit-shaped. Note that, in a manufacturing process, a pressure loss at the extrusion die outlet is preferably set to be 3 MPa/s to 50 MPa/s.

All the shapes of the extrusion orifices provided in the extrusion die outlet may be the same, or the extrusion orifices may be formed to have various shapes in one extrusion die.

Moreover, for example, when circular extrusion orifices are used, the diameters of the extrusion orifices may be varied, and the circular extrusion orifices may be formed to have various different diameters.

Note that, as described above, when the tubular die assembly of the multiple tubular dies or the like is used, the pressure gradient (k) and the decompression rate (v) in each orifice of the tubular die are set to satisfy the required conditions of the above-described formulae (I) and (II).

In addition, as a method to foam the extruded foam in manufacturing the extruded foam, physical foaming and chemical foaming may be adopted. In the physical foaming, a fluid (gas) is injected into the molten resin material at the time of molding, while in the chemical foaming, a foaming agent is added to and mixed with the resin material.

In the physical foaming, the fluid to be injected may be inert gas such as carbon dioxide (carbonic acid gas) and nitrogen gas. In the chemical foaming, the foaming agent such as azodicarbonamide and azobisisobutyronitrile may be used.

In the above-mentioned physical foaming, it is preferable that carbonic acid gas or nitrogen gas in a supercritical state be injected into the molten resin material.

Here, the term "supercritical state" refers to a state where the density of a gas and a liquid becomes equal so that the gas and liquid cannot distinguishably exist, due to exceeding of the limiting temperature and the limiting pressure at which both the gas and the liquid can coexist. The fluid produced in this supercritical state is called a supercritical fluid. In addition, the temperature and the pressure in a supercritical state are respectively called a supercritical temperature and a supercritical pressure. For example, for carbonic acid gas the supercritical temperature is 31°C while the supercritical pressure is 7.4 MPa/s. Further, carbonic acid gas or nitrogen gas in the supercritical state may be injected in an amount of about 4 to 15 mass% with respect to the resin material. It can be injected into the molten resin material in a cylinder.

The shape of the extruded foam may be any known shape of structural materials including a plate, a cylinder, a rectangle, a convex, and a concave shape, but not specifically limited thereto.

In the extruded propylene-based resin foam according to the present invention thus obtained, the open-cell structure is preferably provided in which the continuous gas phase connecting the cells are formed, and the extruded foam has the expansion ratio of 10 or more, so that the gas phase content in the foam is increased. Therefore, the extruded foam is provided to have the excellent sound absorption performance.

Further, with the expansion ratio being 10 or more, the foam can be light-weighted, whereby the usability is improved..

The propylene-based resin as the constituent material contained in the extruded propylene-based resin foam of the present invention is also excellent in recycling property. In addition, it has good chemical resistance and heat-resisting property. Accordingly, the extruded propylene-based resin foam of the present invention is to be provided with those properties (i.e., recycling property, chemical resistance, and heat-resisting property). Further, the use of the propylene-based resin, which is a low-cost material, can realize the provision of the extruded foam having the above-mentioned effects at a low cost.

The extruded foam according to the present invention is excellent in sound absorption performance as described above, and the extruded foam can be used for a structural material (an interior component of a ceiling, a floor, a door or the like) in the field of automobiles, and a structural material (for example, a building material) in the fields of building construction and civil engineering.

Note that the embodiment as described above merely represents an example of embodiments of the present invention and the present invention is not limited to the above embodiment. As a matter of course, the modification and improvement to the configuration without departing from the objects and advantages of the present invention shall be included in the scope of the present invention. The specific structure, shape, and the like in embodying the present invention may be any other structure, shape, and the like as long as it does not depart from the objects and advantages of the present invention.

EXAMPLES

The present invention will be described below in more detail with reference to examples and production examples. However, the present invention is not limited to the contents of the examples or the like.

[1] Test Example 1

Note that numerical values of solid properties and the like in the examples and the production examples described below were measured by the methods described below.

[Values of solid properties, etc. in Production Examples and Examples]

(1) Mass fractions of a propylene-based polymer component (Component 1) at the first stage and a propylene-based polymer component (Component 2) at the second stage:

The mass fractions were obtained from the mass balance using the flow meter integrated value of propylene continuously supplied at the time of polymerization.

(2) Intrinsic viscosity [η]:

The intrinsic viscosity [η] was measured in a tetralin solvent at 135°C. Further, the intrinsic viscosity [η$_2$] of Component 2 was calculated by the following expression (V):
[Formula 9]

$$[\eta_2] = ([\eta total] \times 100 - [\eta_1] \times W_1) / W_2 \quad \cdots\cdots(V)$$

[η$_{total}$]: Intrinsic viscosity (dL/g) of the entire propylene-based polymer
[η$_1$]: Intrinsic viscosity (dL/g) of Component 1
$W_1$: Mass fraction (mass%) of Component 1
$W_2$: Mass fraction (mass%) of Component 2

(3) Melt Flow Rate (MFR):

MFR was measured based on JIS K7210 at a temperature of 230°C and a load weight of 2.16 kgf.

(4) Melt tension:

Capirograph 1C (manufactured by Toyo Seiki Seisaku-sho. Ltd.) was used and measured at a measurement temperature of 230°C and drawing temperature of 3.1 m/min. For the measurement, an orifice having a length of 8 mm and a diameter of 2.095 mm was used.

(5) Measurement of vi scoelasti city:

The viscoelasticity was measured using a device having the following specification. In addition, the storage modulus G' was obtainable from a real number part of the complex modulus.

Device: RMS-800 (manufactured by Rheometrics, Co., Ltd.)
Temperature: 190°C
Distortion: 30%
Frequency: 100 rad/s to 0.01 rad/s

[Production Example 1]

Production of propylene-based multistage polymer

(i) Preparation of pre-polymerization-catalyst component:

After a three-necked flask of 5-liter inner volume equipped with a stirrer underwent treatments of sufficient drying and nitrogen gas substitution, 4 liters of dehydrated heptane and 140 grams of diethyl aluminum chloride were added thereinto. Then, 20 grams of commercially-available Solvay titanium trichloride catalyst (manufactured by Tosoh Finechem Corporation) was added. Thereafter, propylene was continuously added into the flask in which a stirring operation was being performed with the temperature maintained at 20°C. After 80 minutes, the stirring was terminated. Consequently, a pre-polymerization catalyst component was produced in which 0.8 g of propylene was polymerized per gram of titanium trichloride catalyst.

(ii) Polymerization of propylene (first stage)

After a stainless autoclave of 10-liter inner volume equipped with a stirrer underwent treatments of sufficient drying and nitrogen gas substitution, 6 liters of dehydrated heptane was added and the nitrogen in the system was replaced with propylene. Thereafter, propylene was added into the autoclave in which a stirring operation was being performed. The inside of the system was then stabilized at an inner temperature of 60°C and a total pressure of 0.78 MPa/s. Subsequently, 50 milliliters of heptane slurry was added into the autoclave, the heptane slurry containing the pre-polymerization catalyst component obtained in the above-mentioned (i) at an amount equivalent to 0.75 grams of the solid catalyst, thereby initiating a polymerization. The yield of the polymer, which was calculated from the integrated value of propylene flow when the propylene was continuously supplied for 35 minutes, was 151 grams. Sampling and analyzing of a part of the polymer proved that the intrinsic viscosity was 14.1 dL/g. After that, the inner temperature was lowered to 40°C or less, the stirring was slowed down, and the pressure was released.

(iii) Polymerization of propylene (second stage)

After the pressure is released, the inner temperature was again increased to 60°C and 0.15 MPa/s of hydrogen was added into the autoclave. Propylene was added thereto while a stirring operation was being performed. Continuously added at a total pressure of 0.78 MPa/s, the propylene had been polymerized at 60°C for 2.8 hours. At this time, a part of the polymer was sampled and analyzed, and the intrinsic viscosity was 1.16 dL/g.

After the completion of the polymerization, 50 milliliters of methanol was added to the polymer, then the temperature was lowered and the pressure was released. The total contents were transferred to a filtering tank equipped with a filter to add 100 milliliters of 1-butanol, and then the contents were stirred at 85°C for 1 hour for solid-liquid separation. Further, a solid part was washed two times with 6 liters of heptane at 85°C and dried under vacuum, thereby providing 3.1 kg of a propylene-based polymer.

From the above-mentioned result, a polymerization weight ratio of the first stage to the second stage was 12.2/87.8. The intrinsic viscosity of the propylene-based polymer component generated at the second stage was calculated as 1.08 dL/g.

Subsequently, 600 ppm of IRGANOX 1010 (manufactured by Ciba Specialty Chemicals, Co., Ltd.) as an antioxidant and 500 ppm of calcium stearate as a neutralizing agent were added to be mixed therewith in relation to 100 parts by weight of powder of the thus obtained propylene-based multistage polymer. The mixture thereof was melt-mixed by Labo-Plastomill mono-axial extruder (manufactured by Toyo Seiki Seisaku-sho. Ltd., 20 mm in diameter) at a temperature of 230°C to form a propylene-based pellet.

The solid property and resin characteristics of the resultant propylene-based multistage polymer are shown in Table 1.

(Solid properties and resin characteristics of propylene-based multistage polymer)

[Table 1]

| | | Manufacturing Example 1 |
|---|---|---|
| First-stage propylene-based polymer component | Intrinsic viscosity (dL/g) | 14.1 |
| | Weight fraction (% by mass) | 12.2 |
| Second-stage propylene-based polymer component | Intrinsic viscosity (dL/g) | 1.08 |
| | Weight fraction (% by mass) | 87.8 |
| Propylene-based polymer (pellet form) | Intrinsic viscosity (dL/g) | 2.67 |
| | MFR(g/10 minutes) | 3.3 |
| | MT(g) | 7.6 |
| Viscoelastic properties | G'(10)/G'(1) | 2.68 |
| | G'(0.1)/G'(0.01) | 2.96 |

[Example 1]

Manufacturing of the Extruded Propylene-Based Resin Foam (Assembly of Bundled Threads of Extruded Foam):

The extruded propylene resin foam, which is an assembly of the bundled threads of the extrusion-foam in a plate shape in which the multiple extrusion-foamed threads were bundled together, was manufactured by the following method, using the propylene-based multistage polymer pellet obtained in Manufacturing Example 1 above as the molding material, using a tandem-type extrusion-foaming molding apparatus disclosed in JP 2004-237729 A (equipped with two monoaxial extruders including a monoaxial extruder with a screw diameter of $\Phi$ 50 mm and a monoaxial extruder with a screw diameter of $\Phi$ 35 (mm)), and using an extrusion orifice assembly including multiple circular extrusion orifices (circular tube dies, all of which have substantially the same cross-sectional areas) as a die.

Note that the foaming was performed using a $\Phi$ 50-mm-diamter monoaxial extruder by an injection of a $CO_2$-supercritical fluid.

Specifically, while the molding material was being melted using the $\Phi$ 50-mm-diamter monoaxial extruder, the $CO_2$-supercritical fluid was injected. After the fluid was uniformly and sufficiently dissolved in the molten molding material, the material was extruded from the $\Phi$ 35-mm-diameter monoaxial extruder connected thereto such that a resin temperature became 185°C at the die-outlet of the extruder to mold extruded foam. The details of the conditions of the production are described below.

Note that as the resin temperature at the die-outlet of the $\Phi$ 35-mm-diamter-monoaxial extruder, for example, a value obtained by measurement using a thermocouple thermometer may be adopted. The resin temperature may be considered to correspond to the temperature of a foaming molten resin when extruded.

Note that based on these conditions, the pressure gradient calculated in the formula (I) was 450 MPa/m, and the decompression rate calculated in the formula (II) was 60 MPa/s.

(Production conditions)

CO$_2$ supercritical fluid: 7% by mass
Extrusion rate: 8 kg/hr
Pressure of resin upstream of die outlet: 6 MPa/s
Flow rate per circular tube die at die outlet: 100 mm$^3$/s
Diameter of each die outlet: 1 mm
Cross-sectional area of flow path: 0.79 mm$^2$
Extrusion temperature at die outlet: 185°C

[Example 2]

The same method as described in Example 1 was applied except for the following modification made to the production conditions, whereby an extruded propylene-based resin foam as an assembly of bundled threads of the extruded foam in a plate shape, in which the multiple extrusion-foamed threads were bundled together was obtained.

Note that based on these conditions, the pressure gradient calculated in the formula (I) was 600 MPa/m, and the decompression rate calculated in the formula (II) was 79 MPa/s.

(Production conditions)

CO$_2$ supercritical fluid: 7% by mass
Extrusion rate: 8 kg/hr
Pressure of resin upstream of die outlet: 8 MPa/s
Flow rate per circular tube die at die outlet: 66 mm$^3$/s
Diameter of each die outlet: 0.8 mm
Cross-sectional area of flow path: 0.50 mm$^2$
Extrusion temperature at die outlet: 185°C

[Comparative Example 1]

The same method as described in Example 1 was applied except for the following modification made to the production conditions, whereby an extruded propylene-based resin foam as an assembly of bundled threads of the extrusion-foam, in which the multiple extrusion-foamed threads were bundled together was obtained.

Note that based on these conditions, the pressure gradient calculated in the formula (I) was 730 MPa/m, and the decompression rate calculated in the formula (II) was 150 MPa/s.

(Production conditions)

$CO_2$ supercritical fluid: 7% by mass
Extrusion rate: 8 kg/hr
Pressure of resin upstream of die outlet: 9 MPa/s
Flow rate per circular tube die at die outlet: 100 $mm^3$/s
Diameter of each die outlet: 0.8 mm
Cross-sectional area of flow path: 0.50 $mm^2$
Extrusion temperature at die outlet: 185°C

[Comparative Example 2]

The same method as described in Example 1 was applied except for the following modifications made to the production conditions whereby an extruded propylene-based resin foam as an assembly of bundled threads of the extruded foam, in which the multiple extrusion-foamed threads were bundled together was obtained.
Note that based on these conditions, the pressure gradient calculated in the formula (I) was 830 MPa/m, and the decompression rate calculated in the formula (II) was 46 MPa/s.

(Production conditions)

$CO_2$-supercritical fluid: 7 mass%
Extrusion amount: 8 kg/hr
Resin pressure at upstream of die outlet: 10 MPa/s
Flow rate per circular tube die at die outlet: 11 $mm^3$/s
Diameter of each die outlet: 0.5 mm
Cross-sectional area of flow path: 0.20 $mm^2$
Extrusion temperature at outlet of die: 185°C

The expansion ratio, the average cell diameter, and the closed cell content of the extruded propylene-based resin foam obtained in accordance with Examples 1 and 2 and Comparative Examples 1 and 2 are respectively shown in Table 2 as below, the shown result being measured under the following conditions.

(Measurement conditions)

Expansion ratio: The weight of the extruded foam obtained was divided by the volume thereof defined by a submerging method to obtain a density, and the expansion ratio was then calculated.
Closed cell content: It was measured based on ASTM D2856.
Average cell diameter: It was measured based on ASTM D3576-3577.

(Measurement results)

[Table 2]

|  | Example 1 | Example 2 | Comparative Example 1 | Comparative Example 2 |
|---|---|---|---|---|
| Material constant M ($Pa·s^n$) (value at 185°C) | 6000 | ← | ← | ← |
| Material constant n | 0.4 | ← | ← | ← |
| $CO_2$ supercritical fluid (% by mass) | 7 | 7 | 7 | 7 |

(continued)

| | Example 1 | Example 2 | Comparative Example 1 | Comparative Example 2 |
|---|---|---|---|---|
| Pressure of resin upstream of die outlet (MPa) | 6 | 8 | 9 | 10 |
| Flow rate at die outlet (mm$^3$/s) (Remark 1) | 100 | 66 | 100 | 11 |
| Diameter of die outlet (Remark 1) | 1 | 0.8 | 0.8 | 0.5 |
| Cross-sectional area of flow path (mm$^2$) (Remark 1) | 0.79 | 0.50 | 0.50 | 0.20 |
| Temperature of resin at die outlet (°C) | 185 | 185 | 185 | 185 |
| Pressure gradient (MPa/m) (Remark 2) | 450 | 600 | 730 | 830 |
| Decompression rate(MPa/s) (Remark 3) | 60 | 79 | 150 | 46 |
| Expansion ratio (fold) | 24 | 26 | 30 | 32 |
| Closed cell ratio (%) | 10 | 15 | 65 | 60 |
| Average diameter of foam cells ($\mu$m) | 720 | 300 | 170 | 150 |
| (Remark 1) Value per circular tube die (Remark 2) Value calculated in Formula (I) (Remark 3) Value calculated in Formula (II) | | | | |

According to the results shown in Table 2, the extruded propylene-based resin foams obtained in Examples 1 and 2, where the pressure gradients (k) represented by the formula (I) and the decompression rates (v) represented by the formula (II) were set to be 50 MPa/m ≤ k ≤ 800 MPa/m and 5 MPa/s ≤ v ≤ 100 MPa/s, respectively, were found to have expansion ratios of 10 or higher, closed cell content of less than 40% and average cell diameters within a range of 0.005 to 5.0 mm.

On the other hand, the extruded foam obtained in Comparative Example 1, where the decompression rate (v) represented by the formula (II) was more than 100 MPa/s (150 MPa/s), and the extruded foam obtained in Comparative Example 2, where the pressure gradient (k) represented by the formula (I) was more than 800 MPa/m (830 MPa/m), were found to have a high closed cell content and have no open-cell structure therein.

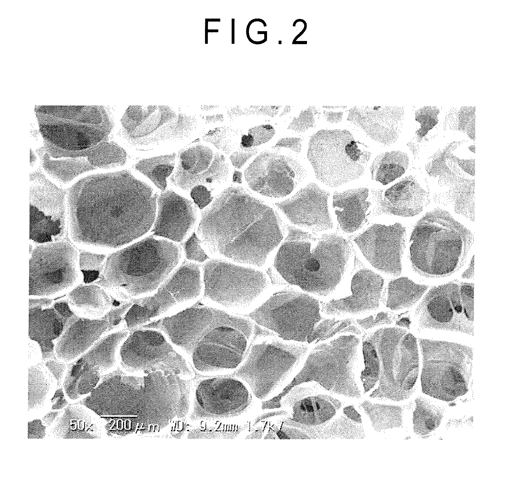

Fig. 2 is an electron micrograph of the cross section of the extruded propylene-based resin foam obtained in Example 1 (magnification of 75).

According to Fig. 2, a large number of foam cells having an average cell diameter of 0.005 to 5.0 mm are arranged to form an open-cell structure in the extruded propylene-based resin foam obtained in Example 1.

In addition, when the sound absorption performance and vibration suppressive property of the extruded propylene-based resin foams obtained in Examples 1 and 2 were evaluated, good results were obtained.

[2] Test Example 2

As Test Example 2, the evaluation was performed to have sound absorption performance of closed-cell foam and open-cell foam obtained formed from the propylene-based multistage polymer shown in Production Example 1 as a molding material.

Table 3 shows results of measurements performed for Examples 3 to 6 and Comparative Examples 3 and 4 under the following measurement conditions and results of the sound absorption performance evaluation.

(Measurement conditions)

[Comparative Example 3]

Expansion ratio: 1
Cell diameter: 0 μm
Total area ratio of broken cell parts: 0%

[Comparative Example 4]

Expansion ratio: 30
Cell diameter: 100 μm
Total area ratio of broken cell parts: 0%

[Example 3]

Expansion ratio: 30
Cell diameter: 100 μm
Total area ratio of broken cell parts: 2%

[Example 4]

Expansion ratio: 30
Cell diameter: 100 μm
Ratio of total area of broken cell parts: 5%

[Example 5]

Expansion ratio: 30
Cell diameter: 100 μm
Total area ratio of broken cell parts: 8%

[Example 6]

Expansion ratio: 30
Cell diameter: 100 μm
Total area ratio of broken cell parts: 10%

Sound absorption coefficients were measured under the above-described conditions. Note that the sound absorption coefficients were measured with a sound absorption coefficient measuring system, type 9302 (manufactured by RION Co., Ltd.) based on ISO 10534-2 to evaluate vertically incident sound absorption coefficients.

(Measurement results)

[Table 3]

| | Expansion ratio (fold) | Cell diameter ($\mu$m) | Total area ratio of cell wall pores (%) | Sound absorption performance (%) | | |
|---|---|---|---|---|---|---|
| | | | | 500(Hz) | 1000(Hz) | 2000(Hz) |
| Comparative Example 3 | 1 | 0 | 0 | 10 | 6 | 3 |
| Comparative Example 4 | 30 | 100 | 0 | 18 | 22 | 29 |
| Example 3 | 30 | 100 | 2 | 20 | 32 | 40 |
| Example 4 | 30 | 100 | 5 | 24 | 45 | 49 |
| Example 5 | 30 | 100 | 8 | 25 | 50 | 55 |
| Example 6 | 30 | 100 | 10 | 26 | 55 | 59 |

According to the results shown in Table 3, the sound absorption performance was improved when the total area ratio of broken cell parts, i.e., cell wall pores, was set to be 2% or more to form a communicating state. An electron microgram taken by an electron microscope VE-7800 (Keyence Corporation) is shown in FIG. 2.

INDUSTRIAL APPLICABILITY

The extruded propylene-based resin foam and the method for manufacturing the same according to the present invention are excellent in sound absorption performance, so that the foam and the manufacturing method can be advantageously applied to structural materials (for instance, a construction material and an interior component such as a ceiling of an automobile, a floor and a door) that require a sound absorption performance in the fields of, for example, building construction, civil engineering and the fields of automobiles.

**Claims**

1.   Extruded propylene-based resin foam formed by extrusion-foaming a propylene-based resin, having:

   a closed cell content of less than 40 percent, and
   an expansion ratio of 10 or more.

2.   The extruded propylene-based resin foam according to claim 1, wherein an average cell diameter of a foam cell forming the foam is 0.005 to 5.0 mm.

3.   The extruded propylene-based resin foam according to claim 1 or 2, wherein
   the extruded propylene-based resin foam is an assembly of bundled threads of extruded foam, in which a plurality of extrusion-foamed threads are bundled.

4.   The extruded propylene-based resin foam according to any one of claims 1 to 3, wherein a total area of broken cell portions is 2% or more of a total area of an observed region of the foam, the broken cell portions being evaluated through a section photograph of the foam.

5.   The extruded propylene-based resin foam according to any one of claims 1 to 3, wherein a total area of the broken cell portions having pore areas of $1 \times 10^{-5}$ mm$^2$ or more is 2% or more of the total area of the observed region, the broken cell portions evaluated through the section photograph of the foam.

6.   A method for manufacturing extruded propylene-based resin foam, comprising steps of:

   heating a propylene-based resin into a molten state;
   kneading the propylene-based resin in the molten state while applying a shear stress; and
   molding the propylene-based resin by extrusion-foaming the resin through an extrusion die, wherein
   the propylene-based resin is extrusion-foamed so that a pressure gradient (k) represented by the following formula (I) and a decompression rate (v) represented by the following formula (II) become 50 MPa/m ≤ k ≤ 800 MPa/m and 5 MPa/s ≤ v ≤ 100 MPa/s respectively at a position where a cross-sectional area of a resin flow path in a vicinity of an extrusion die outlet is minimized, the cross-section area being perpendicular to a flow direction of the resin flow path;

[Formula 1]

$$\text{Pressure gradient (k)}= \frac{M}{(A/\pi)^{\left(\frac{1+n}{2}\right)}} \left\{ \frac{2^{\frac{1}{n}}(1+3n)Q}{nA} \right\}^{n} \quad \cdots\cdots(\text{I})$$

[Formula 2]

$$\text{Decompression rate (v)}= \frac{M}{(A/\pi)^{\left(\frac{1+n}{2}\right)}} \left\{ \frac{2^{\frac{1}{n}}(1+3n)}{n} \right\}^{n} \left(\frac{Q}{A}\right)^{(n+1)} \quad \cdots\cdots(\text{II})$$

(in the formulae (I) and (II), each of M and n represents a material constant, A represents the cross-sectional area $(mm^2)$ at the position where the cross-sectional area of the resin flow path in the vicinity of the extrusion die outlet is minimized, the cross-section area being perpendicular to the flow direction of the resin flow path, and Q represents a volume flow rate $(mm^3/s)$ of the propylene-based resin passing through the die outlet).

7. The method for manufacturing the extruded propylene-based resin foam according to claim 6, wherein a propylene-based multistage polymer including the following constituents (A) and (B) is used as the propylene-based resin:

(A) a constituent containing a propylene homopolymer component or a copolymer component of propylene and α-olefin having carbon number of 2 to 8, each having an intrinsic viscosity [η] of more than 10 dL/g, which is measured in a tetralin solvent at 135°C, the component occupying 5 to 20 mass% of the total polymer; and
(B) a constituent containing a propylene homopolymer component or a copolymer component of propylene and α-olefin having carbon number of 2 to 8, each having an intrinsic viscosity [η] of 0.5 to 3.0 dL/g, which is measured in a tetralin solvent at 135°C, the component occupying 80 to 95 mass% of the total polymer.

8. The method for manufacturing the extruded propylene-based resin foam according to claim 7, wherein a relationship between a melt flow rate (MFR) at 230°C and a melt tension (MT) at 230°C of the propylene-based multistage polymer satisfies the following expression (III):

[Formula 3]

$$\log(MT) > -1.33\log(MFR) + 1.2 \quad \cdots\cdots(\text{III})$$

FIG.1

# F I G . 2

## INTERNATIONAL SEARCH REPORT

| | International application No. |
|---|---|
| | PCT/JP2006/305740 |

**A. CLASSIFICATION OF SUBJECT MATTER**
*C08J9/04*(2006.01), *B29C47/00*(2006.01), *B29K23/00*(2006.01), *B29K105/04* (2006.01)

According to International Patent Classification (IPC) or to both national classification and IPC

**B. FIELDS SEARCHED**

Minimum documentation searched (classification system followed by classification symbols)
B29C47/00, B29K23/00, B29K105/04, C08J9/04-9/14

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-57811 A   (Gunze Kobunshi Corp.), 04 March, 1997 (04.03.97), Claims; Par. Nos. [0005] to [0006], [0009], [0016] (Family: none) | 1-5 |
| X | WO 1999/000236 A1   (The Dow Chemical Co.), 07 January, 1999 (07.01.99), Claims; page 3, line 28 to page 4, line 13; page 7, lines 8 to 32 & EP 991514 A1          & US 6213540 B1 | 1-5 |
| X | JP 2001-1384 A   (KANEKA Corp.), 09 January, 2001 (09.01.01), Claims; Par. Nos. [0028] to [0029], [0031] to [0035] (Family: none) | 1-5 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 June, 2006 (01.06.06) | 13 June, 2006 (13.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/305740 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | JP 2002-348396 A  (JSP Corp., Tokyo Fudo Tekuno Kabushiki Kaisha, Mitsui Norin Co., Ltd.), 04 December, 2002 (04.12.02), Claims; Par. Nos. [0012] to [0013] (Family: none) | 1-2,4-5 |
| X | JP 2003-165858 A  (JSP Corp.), 10 June, 2003 (10.06.03), Claims (Family: none) | 1-2,4-5 |

Form PCT/ISA/210 (continuation of second sheet) (April 2005)

## INTERNATIONAL SEARCH REPORT

International application No.

PCT/JP2006/305740

**Box No. II     Observations where certain claims were found unsearchable (Continuation of item 2 of first sheet)**

This international search report has not been established in respect of certain claims under Article 17(2)(a) for the following reasons:

1. ☐   Claims Nos.:
     because they relate to subject matter not required to be searched by this Authority, namely:

2. ☐   Claims Nos.:
     because they relate to parts of the international application that do not comply with the prescribed requirements to such an extent that no meaningful international search can be carried out, specifically:

3. ☐   Claims Nos.:
     because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
The special technical features of claims 1-5 relate to an extruded propylene resin foam having a closed cell content of less than 40% and an expansion ratio of 10 or above, while those of claims 6-8 relate to a process for the production of extruded propylene resin foam which is specified in the pressure gradient (k) and pressure reducing rate (v) in a resin passageway of an extrusion die as observed in the neighborhood of the outlet at the position where the cross section in the direction perpendicular to the direction of flow is the minimum. However, this process is not one particularly suitable for the production of the foam of claims 1-5.
         (continued to extra sheet)

1. ☐   As all required additional search fees were timely paid by the applicant, this international search report covers all searchable claims.

2. ☐   As all searchable claims could be searched without effort justifying an additional fee, this Authority did not invite payment of any additional fee.

3. ☐   As only some of the required additional search fees were timely paid by the applicant, this international search report covers only those claims for which fees were paid, specifically claims Nos.:

4. ☒   No required additional search fees were timely paid by the applicant.   Consequently, this international search report is restricted to the invention first mentioned in the claims; it is covered by claims Nos.:   1-5

**Remark on Protest**
the

☐   The additional search fees were accompanied by the applicant's protest and, where applicable, payment of a protest fee..

☐   The additional search fees were accompanied by the applicant's protest but the applicable protest fee was not paid within the time limit specified in the invitation.

☒   No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2006/305740 |

Continuation of Box No.III of continuation of first sheet(2)

Consequently, there is no technical relationship between a group of inventions of claims 1-5 and a group of inventions of claims 6-8 involving one or more of the same or corresponding special technical features, so that both groups are not considered as being so linked as to form a single general inventive concept.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7041613 A
- JP 10235670 A
- JP 2003292668 A
- JP 10279632 A
- JP 2000309670 A
- JP 2000336198 A
- JP 2002012717 A
- JP 2002542360 A
- JP 2002509575 A
- JP 2004237729 A
- JP 53001262 A